# EUROPEAN PATENT SPECIFICATION

(11) **EP 3 557 482 B1**
(45) Date of publication and mention of the grant of the patent: **03.11.2021**
(21) Application number: 17883773.8
(22) Date of filing: 22.11.2017
(51) Int. Cl.: G06K 19/07, G06K 9/00, G06K 19/077

(54) **FINGERPRINT RECOGNITION CARD AND METHOD FOR OPERATING POWER SOURCE BY USING FINGERPRINT RECOGNITION CARD**
FINGERABDRUCKERKENNUNGSKARTE UND VERFAHREN ZUM BETRIEB EINER STROMQUELLE MIT VERWENDUNG DER FINGERABDRUCKERKENNUNGSKARTE
CARTE DE RECONNAISSANCE D'EMPREINTES DIGITALES ET PROCÉDÉ DE FONCTIONNEMENT D'UNE SOURCE D'ALIMENTATION AU MOYEN D'UNE CARTE DE RECONNAISSANCE D'EMPREINTES DIGITALES

(30) Priority: 19.12.2016 KR 20160173319
(43) Date of publication of application: 23.10.2019
(73) Proprietor: Kona I Co., Ltd., Seoul 07237 (KR)
(72) Inventor: LEE, Seung Gi, Incheon 21093 (KR); NAM, Jung Bong, Seoul 07207 (KR); JO, Jung Haeng, Seoul 03453 (KR)
(74) Representative: Vossius & Partner Patentanwälte Rechtsanwälte mbB
(86) International application number: PCT/KR2017/013367
(87) International publication number: WO 2018/117442

(56) References cited:
- WO-A1-2016/190678
- WO-A2-2005/058004
- KR-B1- 101 343 349
- KR-B1- 101 613 855
- US-A1- 2004 179 718
- US-A1- 2014 028 439
- US-A1- 2014 183 269
- US-A1- 2015 002 449

## Description

### BACKGROUND

Embodiments of the inventive concepts described herein relates to a fingerprint recognition card and a power supply operating method using the fingerprint recognition card, and more specifically, to a fingerprint recognition card implementing a module substituting for a button-type power supply unit, and a power supply operating method using the fingerprint recognition card.

Recently, with the development of various payment technologies which do not use physical money, methods for more simply performing payment service using a variety of means have been proposed. Since high security is required while pursuing convenience in the process of making a payment, both of two aspects should be considered in proposing a payment method.

A payment method using a plastic card is a payment method used in a classical way. Even in recent days when various payment means are developed, basic payment methods using a plastic card are still preferred. However, although additional security devices are used in the case of a payment method using a user terminal, payments using a plastic card are still approved without any separate security device, and thus illegal use of the plastic card cannot be prevented when the plastic card is lost.

In addition, if a plastic card carried by the user is used as a variety of purposes as well as a payment task, resistance to separately carrying the plastic card may be reduced.

WO 2016/190678 A1 (CRUCIALTEC CO LTD [KR]) (December 1, 2016) and US Patent Registration No. 8,904,187 (registered on December 2, 2014) disclose a background technique of the present disclosure.

### BRIEF SUMMARY

Embodiments of the inventive concepts provide a fingerprint recognition card which can improve payment security by including an additional security means in a plastic card of a plate shape, and a power supply operating method using the fingerprint recognition card.

In addition to providing an additional security means in a plastic card, embodiments of the inventive concepts pursue utilization of stepwise security means so that the plastic card may be used for various purposes.

In the embodiments of the inventive concepts, a plastic card operates through a battery of its own provided in the plastic card, and power is selectively supplied only to a specific area to minimize power consumption of the battery, and since the battery can be charged through a conventional card reader, permanent use of the card can be expected.

Embodiments of the inventive concepts provides a fingerprint recognition card which can additionally secure a space in the plastic card and improve user's convenience by implementing an integrated power supply module in a fingerprint sensor in substitution for a button-type power supply unit provided in the fingerprint recognition card.

Embodiments of the inventive concepts relates to a fingerprint recognition card and a power supply operating method thereof.

The invention is defined by the appended independent claims, and preferred aspects of the invention are defined by the appended dependent claims.

### BRIEF DESCRIPTION OF THE DRAWINGS

FIGS. 1A and 1B are drawings illustrating the outer appearance of a fingerprint recognition card according to an embodiment of the present disclosure.
FIG. 2 is a block diagram illustrating the internal configuration of a fingerprint recognition card according to an embodiment of the present disclosure.
FIG. 3 is a block diagram illustrating the internal configuration of a fingerprint recognition card according to another embodiment of the present disclosure.
FIGS. 4A and 4B are exemplary drawings illustrating a power supply operating method of a fingerprint recognition card (not according to the invention).
FIG. 5 is an exemplary drawing illustrating a power supply operating method of a fingerprint recognition card according to another embodiment of the present disclosure.
FIG. 6 is a flowchart illustrating a power supply operating method of a fingerprint recognition card not according the invention.

In a plurality of figures, like reference numerals refer to like elements.

### DETAILED DESCRIPTION

Specific structural or functional descriptions on the embodiments according to the concept of the present disclosure disclosed in this specification are provided as an example only to describe the embodiments according to the concept of the present disclosure, and the embodiments according to the concept of the present disclosure may be embodied in a variety of forms and are not limited to the embodiments described in this specification.

Since the embodiments according to the concept of the present disclosure may make diverse changes and have various forms, the embodiments will be illustrated in the drawings and described in this specification in detail. However, this is not to limit the embodiments according to the concept of the present disclosure to specific disclosed forms.

Although the terms first, second, etc. may be used to describe various elements, the elements should not be limited by these terms. These terms are only used to distinguish one element from another. For example, a first element could be termed as a second element, and, similarly, a second element could be termed as a first element, without departing from the scope according to the concept of the present disclosure.

It will be understood that when an element is referred to as being "connected" or "coupled" to another element, it may be directly connected or coupled to another element or intervening elements may exist. In contrast, when an element is referred to as being "directly connected" or "directly coupled" to another element, there are no intervening elements. Other words used to describe the relationship between elements should be interpreted in a like fashion. Other expressions describing the relations between the elements, i.e., "between" and "immediately between" or "neighboring" and "immediately neighboring", should be interpreted in the same manner.

The terms used in the specification are used to describe only specific embodiments and are not intended to limit the present disclosure. Singular forms are intended to include plural forms unless the context clearly indicates otherwise. It will be further understood that the terms "include", "have" and the like used in this specification specify the presence of features, numerals, steps, operations, elements, parts, or a combination thereof stated in this specification, but do not preclude in advance the possibility of presence or addition of one or more other features, numerals, steps, operations, components, parts, or a combination thereof.

Unless otherwise defined, all terms used herein, including technical or scientific terms, have the same meanings as those generally understood by those with ordinary knowledge in the field of art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present application.

The description discloses a number of examples in which the bezel implements the function of a power switch or in which the controller performs a power supply operation when the signal provided by the bezel on the front side of the card **or** the sensor on the rear side of the card is received. These examples do not fall within the scope of the claims because in claims 1 and 10 the controller is configured to perform a power supply operation when **both** the first sensing signal of the front sensor 140,530 and the second sensing signal of the rear sensor 150,550 are received.

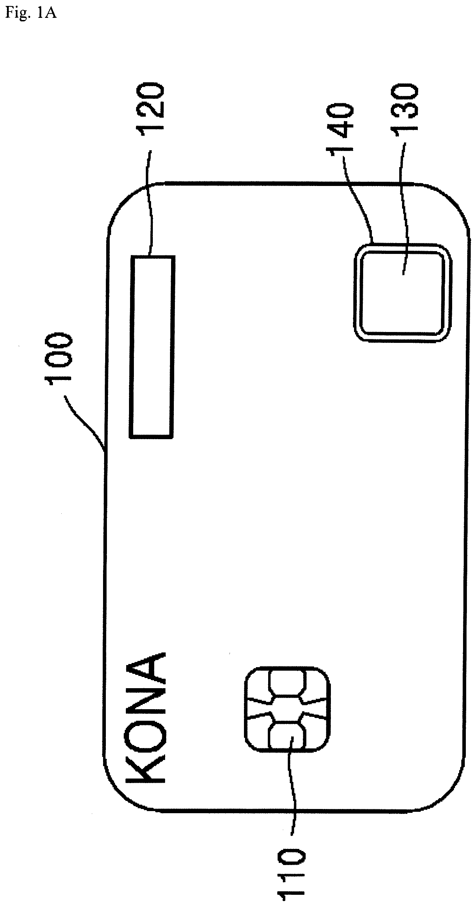

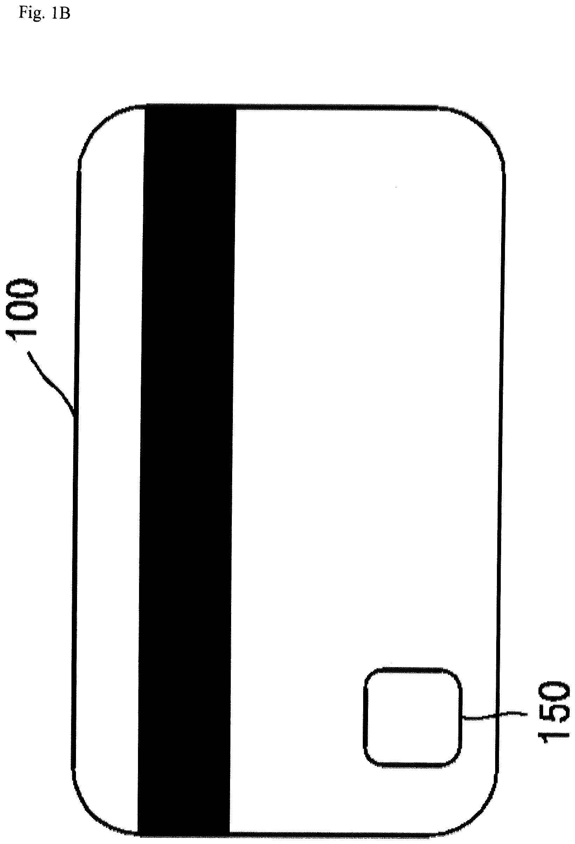

FIGS. 1A and 1B are drawings illustrating the outer appearance of a fingerprint recognition card according to an embodiment of the present disclosure, in which FIG. 1A shows the front side of a card 100, and FIG. 1B shows the rear side of the card 100. Referring to FIGS. 1A and 1B, the fingerprint recognition card 100 according to an embodiment of the present disclosure includes an integrated circuit (IC) chip 110, a display unit 120, a fingerprint recognition sensor 130, a bezel 140 and a capacitive sensor 150 on the rear side of the card 100.

When a fingerprint of a legitimate user of the fingerprint recognition card 100 is recognized, the fingerprint recognition card 100 provides payment information or user identification information stored in the IC chip 110 so that an operation such as card payment, user identification or the like may be performed. The fingerprint recognition card 100 of a plate shape has its own battery therein and senses a fingerprint by supplying power of the battery to the fingerprint recognition sensor 130 in response to the operation of the power supply module. For example, a small amount of electricity, as much as static electricity, flows through the bezel 140 of the card 100, and when a fingerprint of a user is touched, the bezel 140 senses touch of a human body and transfers a power supply signal to a controller. That is, as the bezel 140 implemented along the outer circumference of the fingerprint recognition sensor 130 operates as a capacitive sensor, the bezel 140 implements the function of a power switch and supplies power of its own battery to the fingerprint recognition sensor 130 to activate the fingerprint recognition sensor 130.

The bezel 140 is a metal frame formed along the outer circumference of the fingerprint recognition sensor 130 and operate as a capacitive sensor. That is, the bezel 140 activate the fingerprint recognition sensor 130 in an inactive state by sensing touch of a human body and transferring a sensing signal.

The fingerprint recognition card 100 according to an embodiment of the present disclosure is implemented to be provided with a capacitive sensor 150 on the rear side of the card 100, in addition to the bezel 140 on the front side. For example, the capacitive sensor 150 on the rear side may be implemented as a copper pad arranged under the fingerprint recognition sensor 130. In the case where the sensor 150 is also arranged on the rear side, if the user holds the bezel 140 on the front side and the sensor 150 on the rear side with fingers, touch of a human body is sensed on both sides.The sensing operation is implemented to operate as a power switch when the touch is sensed on both sides.

The power supply operating method using the bezel 140 may be implemented to generate a power supply signal when touch of a human body is sensed for a predetermined period of time or more through setting of the controller connected to the bezel 140. For example, it may be implemented such that if the bezel 140 is set by software to operate as a power supply switch when a user touches the bezel 140 for three seconds or more, a power supply signal is generated when the user touches the bezel 140 for three seconds or more with a finger.

The display unit 120 may visually output various information that can be utilized when the fingerprint recognition card 100 is used. For example, the display unit 120 may include a component which can visually display information, such as a black and white or color LCD or LED. The display unit 120 may display information on turning on or off of the power of the fingerprint recognition card 100, fingerprint confirmation information when a fingerprint is confirmed through fingerprint recognition, payment response information in response to a request for payment, corresponding OTP information when an OTP (one-time password) is created or received, and the like.

The IC chip 110 refers to a control device or a processor which performs control and arithmetic operation needed for operation of the card 100. The IC chip 110 receives an input signal and creates a command corresponding to the input signal. For example, the IC chip 110 may be activated and progress subsequent works (e.g., OTP creation) after receiving a result of verifying a fingerprint sensed by the fingerprint recognition sensor 130. In addition, the IC chip 110 may create information according to the input signal using a predetermined algorithm or the like and transfer a created result data to the display unit 120.

The fingerprint recognition card 100 may embody activation and function implementation of the card through harmonious operation of the IC chip 110, the display unit 120, the fingerprint recognition sensor 130, and the bezel 140 described above. The card 100 may have advantages of maximizing the efficiency of disposing the components in the card and improving user's convenience by using a substitution module such as a bezel, instead of a button or a switch, when a power supply operates.

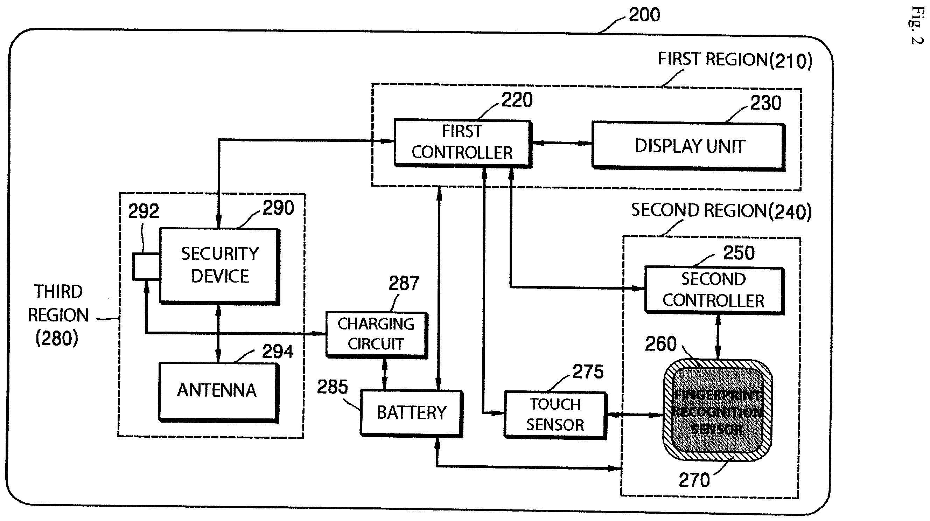

FIG. 2 is a block diagram showing internal components of the fingerprint recognition card 200. Referring to FIG. 2, the fingerprint recognition card 200 may include a first region 210, a second region 240, a third region 280, a battery of its own 285 and a bezel 270.

The first region 210 may include a first controller 220 and a display unit 230. The first region 210 may be supplied with power through a battery of its own 285 when a power supply using the bezel 270 operates. The first controller 220 included in the first region 210 may sense input of the bezel 270 while being in a sleep state and supply power supplied from its own battery 285 to the second region 240. The bezel 270 may operate as a power switch in substitution for a power button.

As described above, according to an embodiment of the present disclosure, the bezel 270 of a conductive metal provided along the outer circumference of the fingerprint recognition sensor 260 operates as a capacitive sensor, instead of a power switch, and senses touch of a human body. The bezel 270 may be connected to the first controller 220 through the touch sensor 275. If a touch on the bezel 270 is sensed, a signal is transferred to the touch sensor 275, and as the touch sensor 275 transfers an input signal to the first controller, a power supply signal may be sensed. The first controller 220 may recognize the signal received from the touch sensor 275 as a power input signal and activate the second region 240 or the third region 280.

As shown in FIG. 1B, the fingerprint recognition card 100 according to an embodiment of the present disclosure is implemented to be provided with a capacitive sensor 150 on the rear side. For example, the capacitive sensor 150 on the rear side may be implemented as a copper pad arranged under the fingerprint recognition sensor 130. In the case where the sensor 150 is also arranged on the rear side, if the user holds the bezel 140 on the front side and the sensor 150 on the rear side with fingers, touch of a human body is sensed on both sides. When touch of a human body is sensed, the sensor 270 or 150 created on the front side or the rear side performs a function of a power switch by transferring a sensing signal to the touch sensor 275 to transfer the sensing signal to the first controller so that power is supplied.

In the fingerprint recognition card 200, since power of the battery 285 is almost not consumed when power is not inputted and the first region 210 wakes up from the sleep state and selectively supplies power to other regions according to input of power through the bezel 270, power consumption of the battery 285 can be minimized.

The first controller 220 may store authentication information. The first controller 220 may receive fingerprint information sensed in the second region 240 and determine whether the fingerprint information matches previously stored authentication information. The first controller 220 may receive a result of the determination according to sensing of a fingerprint from the second controller 250, i.e., whether the sensed fingerprint matches the authentication information, and activate the third region 280 on the basis of the result of the determination. The first controller 220 may control activation of the third region 280 on the basis of the fingerprint authentication result provided from the second region 240. For example, the fingerprint authentication result may be created by determining at least one among whether a sensed fingerprint is normally acquired from the fingerprint recognition sensor 260, whether the sensed fingerprint matches the previously stored authentication information, and a type of the acquired fingerprint.

Activating the third region 280 by the first region 210 may correspond to transmitting the information stored in the security device 290 included in the third region 280 to the outside or activating a specific applet of the security device 290 and, in addition, may be configured of a method of supplying power to the third region 280, a method of connecting an antenna of the third region 280 and activating a communication function, or the like.

The display unit 230 included in the first region 210 may display ON/OFF of the power of the card, whether the fingerprint sensed in the second region 240 is normally authenticated, whether its own battery 285 is discharged, or optional OTP information. The display unit 230 of FIG. 2 may correspond to the display unit 120 of FIG. 1A.

The second region 240 may be activated in response to the power of the battery 285 through the first region 210 and sense fingerprint information of a user through the fingerprint recognition sensor 260. The second controller 250, which is an authentication controller, may be included in the second region 240. The authentication controller 250 may compare the fingerprint information sensed through the fingerprint recognition sensor 260 and the previously stored authentication information and determine whether a legitimate owner of the fingerprint recognition card 200 has inputted the fingerprint. The authentication controller 250 is implemented to provide a result of the determination to the first controller 220 so that the first controller 220 may activate another region (e.g., the third region 280) or display a result of recognizing the fingerprint on the display unit 230.

The fingerprint recognition card 200 may manage fingerprint information of a plurality of fingers, and the authentication controller 250 may determine a finger, the fingerprint of which matches the information sensed by the fingerprint recognition sensor 260. For example, the authentication controller 250 may determine whether a fingerprint sensed through the fingerprint recognition sensor 260 matches a fingerprint of a thumb or a fingerprint of an index finger according to features thereof and provide the first controller 220 of the first region 210 with information on whether the fingerprint matches and information on the type of the fingerprint. The fingerprint information of a plurality of fingers may be managed by the first controller 220, and the authentication controller 250 may determine a finger, the fingerprint of which matches the sensed fingerprint, by communicating with the first controller 220.

The first controller 220 may manage an input signal related to a specific finger, i.e., an input signal for activating a specific applet, and provide a related input signal to the third region 280 as a fingerprint of a specific finger is inputted. As the third region 280 may execute different applets according to the input signal received from the first controller 220, different applets may be executed according to the type of an authenticated finger.

For example, the first controller 220 and the third region 280 may be connected through a plurality of connection lines, and according to combinations of electrical connection of the connection lines, it may be recognized that a different input signal is provided from the first controller 220 to the third region 280. If the first controller 220 and the third region 280 are connected through two connection lines, four distinguished input signals may be provided according to combinations of electrical connection of the two connection lines.

The authentication controller 250 may determine whether the sensed fingerprint information is normal fingerprint information. For example, the authentication controller 250 may determine that the sensed fingerprint information is not normal fingerprint information if more than a predetermined number of feature points for specifying a fingerprint are not acquired from the sensed fingerprint information. In addition, a finger should be touched on the fingerprint recognition sensor 260 for a predetermined period of time or more to correctly sense fingerprint information, and if touch of the finger is released in less than the time period, it is determined that the fingerprint is not acquired, and re-input of the fingerprint information may be requested.

The authentication controller 250 may also display initiation and completion of fingerprint input of the fingerprint sensor 260 and re-request of the fingerprint through the display unit 230. In this case, the authentication controller 250 may transfer the information displayed through the display unit 230 to the first controller of the first region 210. For example, the display unit 230 may display information such as 'Start' indicating beginning of fingerprint input and 'OK' when sensing the fingerprint information is completed, and display information such as 'Re-start' indicating re-request when the fingerprint is not acquired normally.

In addition, a result of fingerprint comparison by the authentication controller 250 may be displayed to the user through the display unit 230. For example, information such as 'PASS' when authentication is successful and 'FAIL' or 'Error' when the authentication fails may be displayed on the display unit 230 as a result of fingerprint recognition.

As described above, the first controller 220 may provide a different input signal to the third region 280 or perform a different operation by itself according to the type of an authenticated finger.

The user may anticipate a next operation of the fingerprint recognition card 200 according to a result of the fingerprint comparison. In addition, when the fingerprint authentication is not accomplished normally, it may be attempted to request the fingerprint recognition sensor 260 to input more correct fingerprint information.

If fingerprint authentication is not accomplished although the fingerprint information and the authentication information are compared more than a predetermined number of times, it is recognized as an attempt of using the fingerprint recognition card 200 by an illegitimate user due to theft or the like of the fingerprint recognition card 200, and the first controller 220 prohibits operation of the fingerprint recognition card 200.

For example, the first controller 220 may not activate the second region 240 and/or the third region 280 even when a power supply signal is inputted into the fingerprint recognition card 200 through the bezel 270.

The first controller 220 activates the third region 280 when the previously stored authentication information matches the fingerprint information acquired through the fingerprint recognition sensor 260.

Although it is described in this specification that the first controller 220 of the first region 210 and the second controller 250, which is an authentication controller, of the second region 240 are separated from each other, the first controller 220 and the second controller 250 may be implemented as one controller.

Generally, since power consumption of an MCU (e.g., the second controller 250) connected to the fingerprint recognition sensor 260 is comparatively high, it is implemented to separately perform arithmetic operation and authentication of fingerprint information through the first controller 220. However, it is possible to configure the present disclosure using only one MCU (e.g., the second controller 250) through enhancement of performance and consumption of power.

The third region 280 may be activated by supplying power from its own battery 285 through the first region 210 or by its own activation of the third region 280 regardless of supply of power.

The third region 280 may include a security device 290 and an antenna 294. The security device 290 may store previously stored authentication information, card user information, user authentication information and the like and may include a recording medium for storing a plurality of applets. The third region 280 may correspond to the IC chip 110 of FIG. 1A. The third region 280 may be referred to as a security region.

Furthermore, the security device 290 may include an encryption module and encrypt and store the stored information or the applets. For example, the security device 290 may include a secure element (SE). The SE may include a universal integrated circuit card (UICC), an embedded SE (eSE) and a micro SD. The UICC may be used in a meaning the same as a USIM chip needed when a cellular phone is activated, and the eSE may mean an element implemented in a form of attaching an SE on the main board of a device by an electronic device manufacturing company. The micro SD is mainly provided in a detachable form, and the micro SD is manufactured to be out of the influence of a mobile communication company, i.e., to be possessed by a micro SD providing organization, to be capable of providing a service through the organization. Since the SE has its own encryption system and is provided in a form separated from the central processing unit (CPU) in charge of the operation of a device in which the SE is installed, it is robust to hacking or the like and thus is highly secure. Accordingly, although activation of the security device 290 may be controlled by the first region 210, the internal operation of the security device 290 is accomplished by a control means of the security device 290 of its own.

The antenna 294 may include a conductive pattern printed on the fingerprint recognition card 200 of a plate shape and perform communication between an external device and the security device 290. For example, when the third region 280 is activated, card payment information or user authentication information stored in the security device 290 may be transmitted to an external payment agency terminal, a payment agency server, a user authentication device or the like.

The security device 290 may request an external OTP creation module to create an OTP through the antenna 294. For example, the security device 290 may request creation of an OTP by transferring user information to the external OTP creation module in a method such as short-range wireless communication. The third region 280 receiving the OTP created by the OTP creation module may display OTP information through the display unit 230.

The security device 290 may store payment approval information, user authentication information, OTP information and the like received from the external device in the security device 290 or provide the information to the first region 210. The first region 210 may display the information received from the external device on the display unit 230 so that the user may utilize the information when the user uses the card.

The security device 290 may perform various operations by executing different applets, and executing the applets may be based on a call command received from the outside or may be initiated by an input signal received from the first controller 220 or by an input means provided in the card itself. Executing the applets by an input means provided in the card itself means selecting an applet executed in the security device 290 through a hard key or the like of the card itself. For example, when a user desires to make a payment through the fingerprint recognition card 200, when the user desires to use the fingerprint recognition card 200 as an ID card, or when the user desires to create an OTP, the user may use the fingerprint recognition card 200 by inputting a different hard key. In addition, a different input signal is provided from the first controller 220 according to the type of a finger that the user has inputted, and a different applet may be executed on the basis of the input signal.

The third region 280 may further include a contact unit 292 contacting with the security device 290. The contact unit 292 is electrically connected to an external card reader or the like and may transfer an electrical signal to the security device 290. A charging circuit 287 may connect its own battery 285 to the contact unit 292 contacting with the security device 290. The card reader may be provided with a contact terminal contacting with the security device 290 through the contact unit 292. A fingerprint recognition card 200 may be supplied with current through the contact unit 292 electrically connected to the card reader, and the charging circuit 287 receiving the current may supply the current to the battery 285 to charge the battery.

As the charging circuit 287 like this is provided, the battery 285 may be easily charged through the card reader even when the battery 285 is discharged, and thus the lifespan of the fingerprint recognition card 200 can be extended.

When a predetermined time is elapsed after the second region 240 and the third region 280 are activated, each of the regions may be automatically deactivated. The duration time of each activated region may be the same or different, and the duration time may be counted by driving an internal timer. In addition, since the first region 210 controls activation of each region, if a preset activated duration time is elapsed when the first region 210 confirms the activated duration time of each region, the first region 210 may deactivate the second region 240 and/or the third region 280.

Through the method like this, the fingerprint recognition card 200 may perform the fingerprint recognition and display operation without an external power supply while minimizing consumption of its own battery 285.

However, the fingerprint recognition card 200 should be continuously used even after the power of the battery 285 is completely consumed.

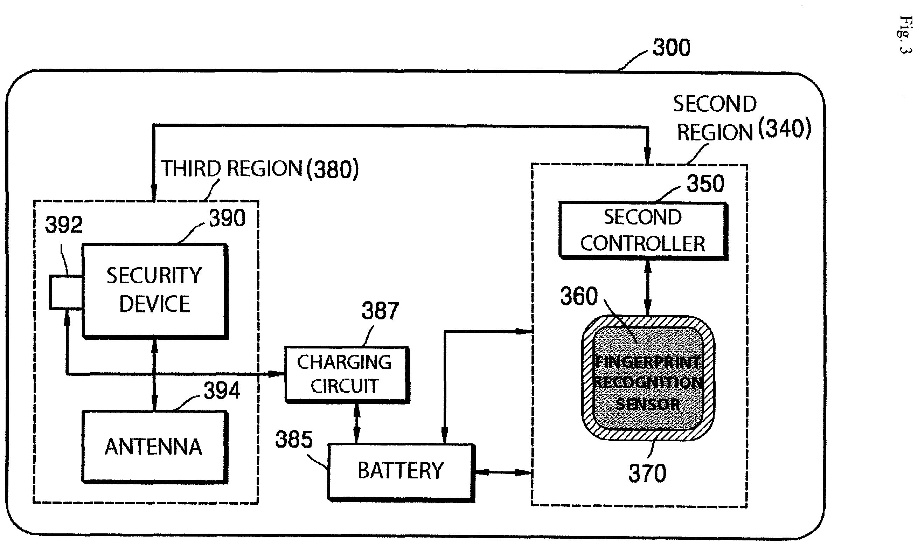

FIG. 3 is a block diagram illustrating a fingerprint recognition card according to another embodiment of the present disclosure. FIG. 3 is a block diagram showing the configuration of a fingerprint recognition card implementing except the first region 210 including the display unit and the first controller of FIG. 2. Since the same reference symbols refer to practically the same components and the same components practically have the same configuration and perform the same operations, detailed description thereof will be omitted for the convenience of explanation.

A fingerprint recognition card 300 may include a second region 340, a third region 380, a charging circuit 387, a battery of its own 385, and a bezel 370. When the first region 210 and the first controller 220 are not included, the fingerprint recognition card 300 may use the second controller as a main processor. When a power supply using the bezel 370 operates, the second controller 350 may sense input of the bezel 370 while being in a sleep state and supply power supplied from the battery 385 to the second region 340. That is, the bezel 370 may operate as a power switch in substitution for a power button. Optionally, a touch sensor may be additionally provided between the bezel 370 and the second controller 350. For example, it may be implemented such that when a touch sensor is provided, the touch sensor may receive fingerprint information from a fingerprint recognition sensor 360, process the fingerprint information, and transfer the fingerprint information to the second controller 350, and when the touch sensor is not provided, the second controller 350 may receive fingerprint information from the fingerprint recognition sensor 360 and perform all needed operations.

The bezel 370 of a conductive metal provided along the outer circumference of the fingerprint recognition sensor 360 operates as a capacitive sensor, instead of a power switch, and senses touch of a human body. The bezel 370 may be connected to the touch sensor or the second controller 350. If a touch on the bezel 370 is sensed, a signal is transferred to the touch sensor, and as the touch sensor transfers an input signal to the second controller 350, a power supply signal may be sensed. The second controller 350 may recognize the signal received from the touch sensor as a power input signal and activate the second region 340 or the third region 380.

Like this, when the second controller 350 performs the power sensing and fingerprint recognition functions without a first controller, the second controller 350 may employ an MCU of a configuration having excellent performance and capacity compared with the controller (e.g., MCU) employed in FIG. 2. In addition, if the fingerprint recognition card is implemented using the second controller 350, there is an advantage in that a component capable of adding or improving other functions may be further arranged as an additional space can be secured when the circuit is arranged.

As shown in FIG. 1B, the fingerprint recognition card 100 of the present disclosure is implemented to be provided with a capacitive sensor 150 on the rear side. For example, the capacitive sensor 150 on the rear side may be implemented as a copper pad arranged under the fingerprint recognition sensor 130. In the case where the sensor 150 is also arranged on the rear side, if the user holds the bezel 140 on the front side and the sensor 150 on the rear side with fingers, touch of a human body is sensed on both sides. When touch of a human body is sensed, the sensor (e.g., the bezel or the copper pad on the rear side) created on the front side or the rear side performs a function of a power switch by transferring a sensing signal to the touch sensor to transfer the sensing signal to the second controller 350 so that power may be supplied.

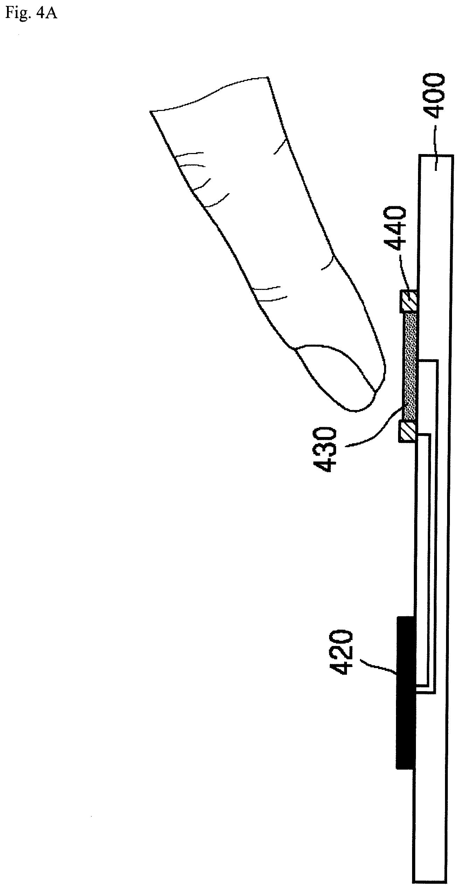

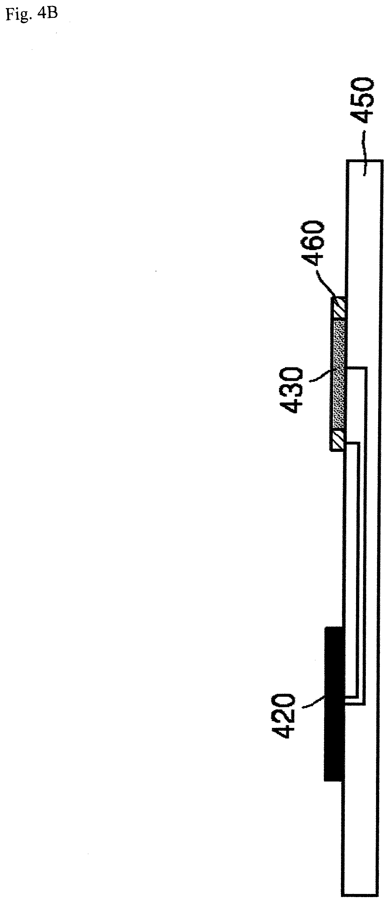

FIGS. 4A and 4B are exemplary drawings illustrating a power supply operating method of a fingerprint recognition card (not according to the invention), which shows the cross sections of the card 400. FIG. 4A shows that the bezel 440 surrounding the fingerprint recognition sensor 430 protrudes more than the fingerprint recognition sensor 430, and FIG. 4B shows that the fingerprint recognition sensor 430 and the bezel 440 are implemented to have the same height. The card 400 may include a controller 420, the fingerprint recognition sensor 430, and the bezel 440.

As shown in FIG. 4A, the bezel 440 and the fingerprint recognition sensor 430 may be connected to the controller 420, respectively. The bezel 440 protects the fingerprint recognition sensor 430 and may be designed to have a height higher than that of the fingerprint recognition sensor 430 to be touched first when a finger is touched (FIG. 4A). The bezel 460 implemented in the card 450 and may be implemented to have a height the same as that of the fingerprint recognition sensor 430, as shown in FIG. 4B.

As described above, the bezel 440 implemented using a conductive metal may sense touch of a human body and transfer the touch to the controller 420. The bezel 440 may transmit a power sensing signal to the first controller 220 or the second controller 350. When a touch sensor is arranged between the bezel 440 and the controller 420, it may be implemented to supply power as the bezel 440 transfers a sensed signal to the touch sensor and the touch sensor transfers a power sensing signal to the controller 420.

For example, if a user puts a finger on the sensor when the user uses the fingerprint recognition card, the finger also touches the bezel 460, and the power supply operates through the bezel 460. If the sensing operation speed is improved, the time difference between the power supply operation and the fingerprint recognition can be reduced, and thus the user may feel that the fingerprint recognition is carried out as soon as a finger is touched, without waiting for a separate power supply operation. That is, when the fingerprint recognition card 400 or 450 is provided with a separate power button (or switch), it is disadvantageous in that the user should press the power button and then put a finger on the fingerprint sensor. However, since the fingerprint recognition card 400 or 450 not according to the present invention implements the sensor and power supply functions in an integrated form, there is an effect of maximizing user's convenience.

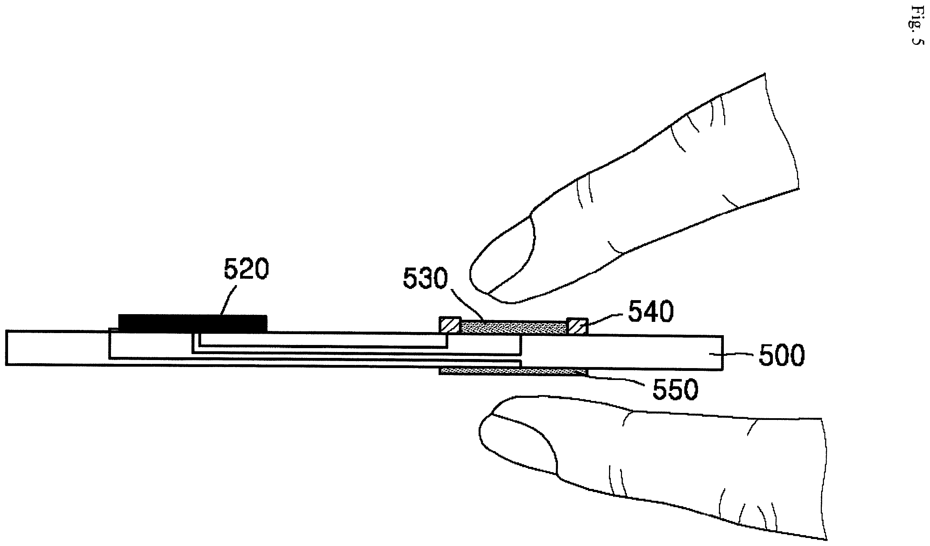

FIG. 5 is a drawing illustrating a power supply operating method of a fingerprint recognition card 500 according to another embodiment of the present invention. The card 500 include a controller 520, a fingerprint recognition sensor 530, a bezel 540, and a rear side sensor 550.

In the embodiment of this figure, the fingerprint recognition card 500 is implemented to be provided with a capacitive sensor 550 on the rear side. For example, the capacitive sensor 550 on the rear side may be implemented as a copper pad arranged under the fingerprint recognition sensor 530. When the user holds the bezel 540 on the front side and the capacitive sensor 550 on the rear side with fingers, touch of a human body is sensed on both sides.

As an embodiment according to the invention, the card 500 is implemented to sense touch of a human body as a power supply operation only when both the bezel 540 on the front side and the sensor 550 on the rear side sense the touch (e.g., when the user holds the card with two fingers). It may be implemented to perform a different operation when touch of a human body is sensed on one of the front side and the rear side and when touch of a human body is sensed on both sides.

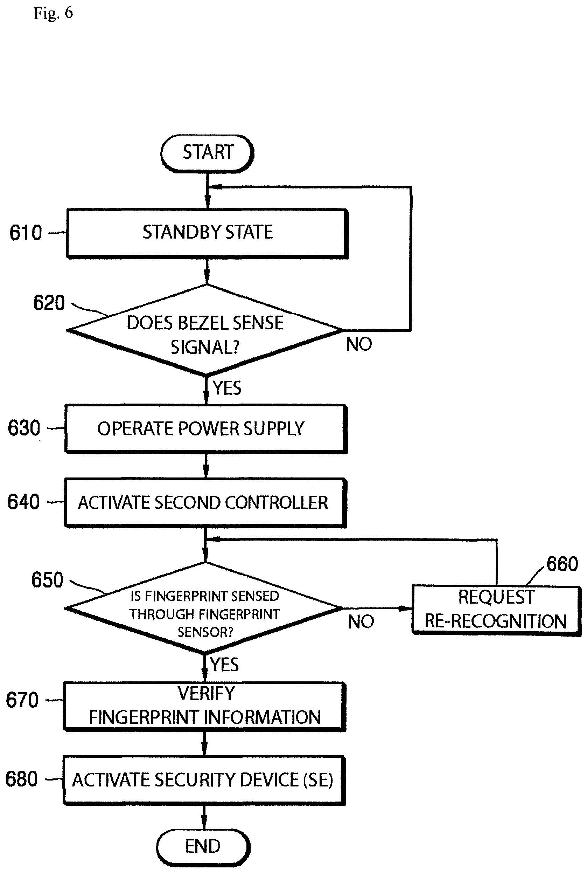

FIG. 6 is a flowchart illustrating a power supply operating method of a fingerprint recognition card not according to the present invention. The fingerprint recognition card is in a standby state before receiving a power sensing signal (step 610). The controller and the security device may be in an OFF state to minimize power consumption. However, the controller, to which a power module including the bezel 140 and the rear sensor 150 is connected, may be in a sleep state and may be implemented to be activated and supply power to other modules when the power sensing signal is transferred.

When components of the fingerprint recognition card are arranged as shown in FIG. 2, the first controller 220 may receive a sensed signal from the bezel through the touch sensor (step 620). The first controller 220 is activated according to the sensed signal and activates the second controller 250 if a fingerprint recognition function is needed (steps 630 and 640). It is possible to design which components (the second controller 250 or the security device 290) the first controller 220 will activate after being activated.

When the second controller 250 is activated, the fingerprint recognition sensor 260 is activated and senses a fingerprint of the user (step 650). When the fingerprint is not recognized properly, re-recognition may be requested through the guidance of the display unit (step 660).

Next, the controller may verify the fingerprint information (step 670). The second controller 250 may primarily verify which kind of information is the inputted fingerprint information (e.g., information of which finger) and transfers the fingerprint information to the first controller 220, and the first controller 220 may verify whether the inputted fingerprint information is the same as previously stored fingerprint information. When the fingerprint recognition card is configured of only the second controller 250 without the first controller 220, it may be implemented to verify both the type and validity of the fingerprint information by the second controller 250.

If verification of the fingerprint information is completed, the first controller 220 may activate the security region and perform subsequent operations (step 680). For example, when the fingerprint recognition card functions as an admission ticket or an ID card, an antenna may be connected and activated, and when the fingerprint recognition card is an OTP card, an OTP number may be displayed by executing an OTP algorithm.

According to the present disclosure, there is provided a fingerprint recognition card and a power supply operating method using the same, which can prevent illegal use of a plastic card, even when the plastic card is stolen, by providing an additional security means in the plastic card of a plate shape.

According to the present disclosure, there is provided a fingerprint recognition card and a power supply operating method using the same, which can use a plastic card of a plate shape for various purposes according to an external call command, a type of a recognized fingerprint, or the like.

According to the present disclosure, there is provided a fingerprint recognition card and a power supply operating method using the same, which can use a battery of its own and minimize consumption of the battery by supplying power to a specific area according to operation.

According to the present disclosure, there is provided a fingerprint recognition card, in which a battery of its own can be charged through a contact unit that is contacted when the card is read.

Until now, the present disclosure has been described in detail focusing on the preferred embodiments shown in the drawings. These embodiments are not intended to restrict the present disclosure, but only illustrative, and should be considered from the descriptive viewpoint, not the restrictive viewpoint. The true scope of the present disclosure should be defined by the attached claims, not by the above descriptions. Although specific terms are used in this specification, they are used only to describe the concept of the present disclosure, not to limit the meaning or restrict the scope of the claims.

## Claims

1. A fingerprint recognition card (100, 500) comprising:
a fingerprint recognition sensor (130, 530) for acquiring fingerprint information according to touch of a fingerprint of a user and a front sensor (140, 540) formed as a bezel along an outer circumference of the fingerprint recognition sensor (130, 530) and operating as a capacitive sensor; and
a controller (520) for receiving a first sensing signal from the front sensor (140, 530), the front sensor (140,530) being adapted to sense touch of the user, create the first sensing signal, and transmit the first sensing signal to the controller (520),
**characterized in that** the fingerprint recognition card (100, 500) further comprises a rear sensor (150, 550) formed on a rear side of the fingerprint recognition card (100, 500) under the fingerprint recognition sensor (130, 530) and the front sensor (140, 530) and operating as a capacitive sensor,
wherein the controller (520) is further configured to receive a second sensing signal from the rear sensor (150, 550) and perform a power supply operation when both the first sensing signal of the front sensor (140,530) and the second sensing signal of the rear sensor (150,550) are received, and
wherein the rear sensor (150,550) senses touch of the user, creates the second sensing signal, and transmits the second sensing signal to the controller (520).

2. The card according to claim 1, wherein the controller (520) includes a first controller (220) connected to a display unit (120, 230) or a second controller (250, 350) connected to the fingerprint recognition sensor (260, 360).

3. The card according to claim 2, wherein when the controller (520) receives the first sensing signal from the front sensor (270), the controller (520) receives the first sensing signal through a touch sensor (275) arranged between the controller (520) and the front sensor (270).

4. The card according to claim 1, wherein the front sensor (140, 540) is configured of a conductive metal.

5. The card according to claim 1, wherein the rear sensor (150, 550) is implemented as a copper pad on a PCB.

6. The card according to claim 1, further comprising:
a display unit (120, 230) for visually displaying at least one among identification of a card user, a payment processing step, whether or not a payment is approved, and a one-time password (OTP);
a security device (290, 390) for encrypting and storing user identification information or card payment information; and
an antenna (294, 394) for exchanging signals between an external device and the security device (290, 390).

7. The card according to claim 6, wherein the security device (290, 390) includes a recording medium for storing a plurality of applets, and one of the plurality of applets is activated according to control of the controller (220, 520).

8. The card according to claim 1 or 2, wherein the controller (520) determines at least one among whether a sensed fingerprint is normally acquired from the fingerprint recognition sensor (130, 530), whether the sensed fingerprint matches previously stored authentication information, and a type of the acquired fingerprint.

9. The card according to claim 7, wherein the controller (220, 520) activates one of the plurality of applets on the basis of the fingerprint type determined by an authentication controller (250).

10. A power supply operating method of a fingerprint recognition card (100, 500) including a fingerprint recognition sensor (130, 530) and a front sensor (140, 540) formed along an outer circumference of the fingerprint recognition sensor (130, 530), the method comprising the steps of:
creating a first sensing signal by the front sensor (140, 540) when a fingerprint of a user is touched on the front sensor (140, 540),
**characterized by** creating a second sensing signal by a rear sensor (150,550), which is formed on a rear side of the fingerprint recognition card (100, 500) under the fingerprint recognition sensor (130,530) and the front sensor (140,540), when a user touches the rear sensor (150,550);
transferring the first sensing signal of the front sensor (140,540) and the second sensing signal of the rear sensor (150, 550) to a controller (520) according to touch of the user; and activating the controller (520) to perform a power supply operation when both the first sensing signal of the front sensor (140,540) and the second sensing signal of the rear sensor (150,550) are received.

11. The method according to claim 10, wherein when the controller (520) is activated, the controller (520) is further configured to activate the fingerprint recognition sensor (260, 360) or a security device (290, 390) by supplying power of a battery (285, 385).

12. The method according to claim 11, further comprising the steps of:
sensing a fingerprint of the user on the basis of the supplied power, by the fingerprint recognition sensor (260, 360) of a fingerprint recognition region; and
controlling activation of a security region (280) by comparing the sensed fingerprint and previously stored authentication information.

13. The method according to claim 12, wherein the step of controlling activation of a security region (280) includes the step of activating a specific applet of the security region (280) when the sensed fingerprint matches the previously stored authentication information.

## Patentansprüche

1. Fingerabdruckerkennungskarte (100, 500) mit:
einem Fingerabdruckerkennungssensor (130, 530) zum Erfassen von Fingerabdruckinformationen gemäß einer Berührung eines Fingerabdrucks eines Benutzers und einem vorderen Sensor (140, 540), der als eine Blende längs eines Außenumfangs des Fingerabdruckerkennungssensors (130, 530) ausgebildet ist und als kapazitiver Sensor arbeitet; und
einer Steuereinheit (520) zum Empfangen eines ersten Erfassungssignals vom vorderen Sensor (140, 530), wobei der vordere Sensor (140,530) eingerichtet ist, eine Berührung des Benutzers zu erfassen, das erste Erfassungssignal zu erzeugen und das erste Erfassungssignal an die Steuereinheit (520) zu übertragen,
**dadurch gekennzeichnet, dass** die Fingerabdruckerkennungskarte (100, 500) ferner einen hinteren Sensor (150, 550) aufweist, der auf einer Rückseite der Fingerabdruckerkennungskarte (100, 500) unter dem Fingerabdruckerkennungssensor (130, 530) und dem vorderen Sensor (140, 530) ausgebildet ist und als kapazitiver Sensor arbeitet,
wobei die Steuereinheit (520) ferner konfiguriert ist, ein zweites Erfassungssignal vom hinteren Sensor (150, 550) zu empfangen und einen Stromversorgungsbetrieb auszuführen, wenn sowohl das erste Erfassungssignal des vorderen Sensors (140, 530) als auch das zweite Erfassungssignal des hinteren Sensors (150, 550) empfangen werden, und wobei der hintere Sensor (150,550) eine Berührung des Benutzers erfasst, das zweite Erfassungssignal erzeugt und das zweite Erfassungssignal zur Steuereinheit (520) überträgt.

2. Karte nach Anspruch 1, wobei die Steuereinheit (520) eine erste Steuereinheit (220), die mit einer Anzeigeeinheit (120, 230) verbunden ist, oder eine zweite Steuereinheit (250, 350) aufweist, die mit dem Fingerabdruckerkennungssensor (260, 360) verbunden ist.

3. Karte nach Anspruch 2, wobei, wenn die Steuereinheit (520) das erste Erfassungssignal vom vorderen Sensor (270) empfängt, die Steuereinheit (520) das erste Erfassungssignal durch einen Berührungssensor (275) empfangt, der zwischen der Steuereinheit (520) und dem vorderen Sensor (270) angeordnet ist.

4. Karte nach Anspruch 1, wobei der vordere Sensor (140, 540) aus einem leitfähigen Metall besteht.

5. Karte nach Anspruch 1, wobei der hintere Sensor (150, 550) als eine Kupferkontaktstelle auf einer Leiterplatte implementiert ist.

6. Karte nach Anspruch 1, die ferner aufweist:
eine Anzeigeeinheit (120, 230) zum visuellen Anzeigen von mindestens einem aus: einer Identifikation eines Kartenbenutzers, einem Zahlungsverarbeitungsschritt, ob eine Zahlung genehmigt ist oder nicht, und einem Einmalpasswort (OTP);
eine Sicherheitsvorrichtung (290, 390) zum Verschlüsseln und Speichern von Benutzeridentifikationsinformationen oder Kartenzahlungsinformationen; und
eine Antenne (294, 394) zum Austauschen von Signalen zwischen einer externen Vorrichtung und der Sicherheitsvorrichtung (290, 390).

7. Karte nach Anspruch 6, wobei die Sicherheitsvorrichtung (290, 390) ein Aufzeichnungsmedium zum Speichern von mehreren Applets aufweist und eines der mehreren Applets gemäß einer Steuerung der Steuereinheit (220, 520) aktiviert wird.

8. Karte nach Anspruch 1 oder 2, wobei die Steuereinheit (520) mindestens eines feststellt aus: ob ein erfasster Fingerabdruck vom Fingerabdruckerkennungssensor (130, 530) normal erfasst wird, ob der erfasste Fingerabdruck mit vorher gespeicherten Authentifizierungsinformationen übereinstimmt, und einem Typ des erfassten Fingerabdrucks.

9. Karte nach Anspruch 7, wobei die Steuereinheit (220, 520) eines der mehreren Applets auf der Grundlage des durch eine Authentifizierungssteuereinheit (250) festgestellten Fingerabdrucktyps aktiviert.

10. Stromversorgungs-Betriebsverfahren einer Fingerabdruckerkennungskarte (100, 500) mit einem Fingerabdruckerkennungssensor (130, 530) und einem vorderen Sensor (140, 540), der längs eines Außenumfangs des Fingerabdruckerkennungssensors (130, 530) ausgebildet ist, wobei das Verfahren die Schritte aufweist:
Erzeugen eines ersten Erfassungssignals durch den vorderen Sensor (140, 540), wenn ein Fingerabdruck eines Benutzers den vorderen Sensor (140, 540) berührt,
**gekennzeichnet durch** Erzeugen eines zweiten Erfassungssignals durch einen hinteren Sensor (150,550), der auf einer Rückseite der Fingerabdruckerkennungskarte (100, 500) unter dem Fingerabdruckerkennungssensor (130,530) und dem vorderen Sensor (140,540) ausgebildet ist, wenn ein Benutzer den hinteren Sensor (150,550) berührt;
Übertragen des ersten Erfassungssignals des vorderen Sensors (140,540) und des zweiten Erfassungssignals des hinteren Sensors (150, 550) zu einer Steuereinheit (520) gemäß einer Berührung des Benutzers; und
Aktivieren der Steuereinheit (520), einen Stromversorgungsbetrieb durchzuführen, wenn sowohl das erste Erfassungssignal des vorderen Sensors (140, 540) als auch das zweite Erfassungssignal des hinteren Sensors (150, 550) empfangen werden.

11. Verfahren nach Anspruch 10, wobei wenn die Steuereinheit (520) aktiviert wird, die Steuereinheit (520) ferner konfiguriert ist, den Fingerabdruckerkennungssensor (260, 360) oder eine Sicherheitsvorrichtung (290, 390) durch Liefern von Strom einer Batterie (285, 385) zu aktivieren.

12. Verfahren nach Anspruch 11, das ferner die Schritte aufweist:
Erfassen eines Fingerabdrucks des Benutzers auf der Grundlage des zugeführten Stroms durch den Fingerabdruckerkennungssensor (260, 360) eines Fingerabdruckerkennungsbereichs; und
Steuern der Aktivierung eines Sicherheitsbereichs (280) durch Vergleichen des erfassten Fingerabdrucks und vorher gespeicherter Authentifizierungsinformationen.

13. Verfahren nach Anspruch 12, wobei der Schritt des Steuerns der Aktivierung eines Sicherheitsbereichs (280) den Schritt des Aktivierens eines spezifischen Applets des Sicherheitsbereichs (280) aufweist, wenn der erfasste Fingerabdruck mit den vorher gespeicherten Authentifizierungsinformationen übereinstimmt.

## Revendications

1. Carte de reconnaissance d'empreinte digitale (100, 500), comprenant :
un capteur de reconnaissance d'empreinte digitale (130, 530) pour l'acquisition d'informations d'empreinte digitale en fonction de l'application d'une empreinte digitale d'un utilisateur, et un capteur avant (140, 540) formé comme un encadrement le long de la circonférence extérieure du capteur de reconnaissance d'empreinte digitale (130, 530) et fonctionnant comme un capteur capacitif ; et
un contrôleur (520) destiné à recevoir un premier signal de détection du capteur avant (140, 530), le capteur avant (140,530) étant apte à détecter un contact tactile par l'utilisateur, générer le premier signal de détection, et transmettre le signal de détection au contrôleur (520),
**caractérisée en ce que** ladite carte de reconnaissance d'empreinte digitale (100, 500) comprend en outre un capteur arrière (150, 550) formé sur la face arrière de la carte de reconnaissance d'empreinte digitale (100, 500) en dessous du capteur de reconnaissance d'empreinte digitale (130, 530) et du capteur avant (140, 530) et fonctionnant comme un capteur capacitif,
le contrôleur (520) étant en outre prévu pour recevoir un deuxième signal de détection du capteur arrière (150, 550) et effectuer une opération d'alimentation électrique lorsque le premier signal de détection du capteur avant (140,530) ainsi que le deuxième signal de détection du capteur arrière (150,550) sont reçus, et
le capteur arrière (150,550) détectant un contact tactile de l'utilisateur, générant le deuxième signal de détection, et transmettant le deuxième signal de détection au contrôleur (520).

2. Carte selon la revendication 1, où le contrôleur (520) comprend un premier contrôleur (220) connecté à une unité d'affichage (120, 230) ou un deuxième contrôleur (250, 350) connecté au capteur de reconnaissance d'empreinte digitale (260, 360).

3. Carte selon la revendication 2, où, lorsque le contrôleur (520) reçoit le premier signal de détection du capteur avant (270), le contrôleur (520) reçoit le premier signal de détection via un capteur tactile (275) disposé entre le contrôleur (520) et le capteur avant (270).

4. Carte selon la revendication 1, où le capteur avant (140, 540) est constitué d'un métal conducteur.

5. Carte selon la revendication 1, où le capteur arrière (150, 550) est implémenté comme pastille en cuivre sur une carte de circuit imprimé.

6. Carte selon la revendication 1, comprenant en outre :
une unité d'affichage (120, 230) destinée à afficher visuellement une identification d'un utilisateur de carte et/ou une étape de traitement de paiement et/ou si un paiement est approuvé ou non et/ou un mot de passe non réutilisable (OTP) ;
un dispositif de sécurité (290, 390) destiné à crypter et à mémoriser des informations d'identification d'utilisateur ou des informations de paiement de carte ; et
une antenne (294, 394) pour l'échange de signaux entre un dispositif extérieur et le dispositif de sécurité (290, 390).

7. Carte selon la revendication 6, où le dispositif de sécurité (290, 390) comprend un support d'enregistrement pour le stockage d'une pluralité d'applets, et où une applet de la pluralité d'applets est activée en fonction d'une commande du contrôleur (220, 520).

8. Carte selon la revendication 1 ou la revendication 2, où le contrôleur (520) détermine si une empreinte digitale détectée est normalement acquise par le capteur de reconnaissance d'empreinte digitale (130, 530) et/ou si l'empreinte digitale détectée correspond à des informations d'authentification préalablement mémorisées, et un type de l'empreinte digitale acquise.

9. Carte selon la revendication 7, où le contrôleur (220, 520) active une applet de la pluralité d'applets sur la base du type d'empreinte digitale déterminé par un contrôleur d'authentification (250).

10. Procédé d'alimentation électrique d'une carte de reconnaissance d'empreinte digitale (100, 500) comprenant un capteur de reconnaissance d'empreinte digitale (130, 530) et un capteur avant (140, 540) formé le long de la circonférence extérieure du capteur de reconnaissance d'empreinte digitale (130, 530), ledit procédé comprenant les étapes de :
génération d'un premier signal de détection par le capteur avant (140, 540) lorsqu'une empreinte digitale d'un utilisateur est appliquée sur le capteur avant (140, 540),
**caractérisé par** la génération d'un deuxième signal de détection par un capteur arrière (150,550) formé sur une face arrière de la carte de reconnaissance d'empreinte digitale (100, 500) en dessous du capteur de reconnaissance d'empreinte digitale (130,530) et du capteur avant (140,540), lorsqu'un utilisateur contacte tactilement le capteur arrière (150,550) ;
transfert du premier signal de détection du capteur avant (140,540) et du deuxième signal de détection du capteur arrière (150, 550) à un contrôleur (520) en fonction du contact tactile de l'utilisateur ; et
activation du contrôleur (520) pour effectuer une opération d'alimentation électrique lorsque le premier signal de détection du capteur avant (140,540) ainsi que le deuxième signal de détection du capteur arrière (150,550) sont reçus.

11. Procédé selon la revendication 10, où, lorsque le contrôleur (520) est activé, le contrôleur (520) est en outre prévu pour activer le capteur de reconnaissance d'empreinte digitale (260, 360) ou un dispositif de sécurité (290, 390) par fourniture de courant d'une batterie (285, 385).

12. Procédé selon la revendication 11, comprenant en outre les étapes de :
détection d'une empreinte digitale de l'utilisateur sur la base du courant fourni, par le capteur de reconnaissance d'empreinte digitale (260, 360) d'une zone de reconnaissance d'empreinte digitale ; et
commande d'activation d'une zone de sécurité (280) par comparaison de l'empreinte digitale détectée et des informations d'authentification préalablement mémorisées.

13. Procédé selon la revendication 12, où l'étape de commande d'activation d'une zone de sécurité (280) comprend l'étape d'activation d'une applet spécifique de la zone de sécurité (280) si l'empreinte digitale détectée correspond aux informations d'authentification préalablement mémorisées.
